# EUROPEAN PATENT APPLICATION

(11) **EP 4 498 479 A2**
(43) Date of publication of application: **29.01.2025**
(21) Application number: 24184253.3
(22) Date of filing: 25.06.2024
(51) Int. Cl.: H01M 10/613, H01M 10/615, H01M 10/625, H01M 10/6568, H01M 10/6571, H01M 10/66, H01M 10/663, H01M 50/249

(54) **AN ENERGY STORAGE SYSTEM**

(30) Priority: 24.07.2023 GB 202311302
(71) Applicant: Rolls-Royce plc, London N1 9FX (GB)
(72) Inventor: Dobson, Matthew, Derby, DE24 8BJ (GB)
(74) Representative: Rolls-Royce plc

(57) **Abstract**

There is disclosed an energy storage system for an electric aircraft, the energy storage system comprising: at least one battery pack (40) configured to be disposed onboard the aircraft (101), and a thermal management system (400). The thermal management system (400) comprises a first circulation loop (420) configured to be disposed onboard the aircraft and configured to contain a first working fluid, the first circulation loop (420) including: a variable speed pump (422) configured to pump the first working fluid around the first circulation loop, a battery heat exchanger (404) configured to provide a thermal interface between the at least one battery pack and the first working fluid, and a controller (430) configured to control operation of the variable speed pump (422) to intermittently pump the first working fluid to distribute heat around the thermal management system (400).

## Description

### TECHNICAL FIELD

The present invention relates to an energy storage system for an electric aircraft, and an electric aircraft.

### BACKGROUND

Interest in aircraft with electric and hybrid electric propulsion systems is increasing because of the need to reduce carbon emissions and pollution, and because of developments in the facilitating electrical technologies. Hybrid electric propulsion systems include both internal combustion engines, for example gas turbines or diesel engines, and energy storage, typically in the form of batteries. Purely electric propulsion systems completely dispense with internal combustion engines and use only batteries or, in some instances, fuel cells, as an energy source for their propulsors.

The terms Advanced Air Mobility (AAM) and Urban Air Mobility (UAM) refer to the use of aircraft - typically electric and hybrid electric aircraft - to transport passengers relatively short distances, for example tens or perhaps hundreds of kilometres. Most proposed AAM platforms have Vertical Take-Off and Landing (VTOL) or Short Take-Off and Landing (STOL) capabilities so that the aircraft can take-off and land at locations convenient for passengers, for example at so-called 'vertiports' close to or in urban environments. It is expected that the number of passengers carried by AAM platforms will be relatively small - likely fewer than twenty and typically of the order of five to ten.

It is desirable to reduce the weight and cost and improve an efficiency of an electric or hybrid aircraft. Thermal management system (TMS) solutions circulate coolant through battery packs on an electric aircraft to cool the battery packs.

### SUMMARY OF THE INVENTION

The skilled person will appreciate that except where mutually exclusive, a feature described in relation to any one of the above aspects may be applied mutatis mutandis to any other aspect. Furthermore, except where mutually exclusive any feature described herein may be applied to any aspect and/or combined with any other feature described herein.

According to a first aspect, there is provided an energy storage system for an electric aircraft, the energy storage system comprising:
at least one battery pack configured to be disposed onboard the aircraft, and
a thermal management system, the thermal management system comprising:
   a first circulation loop configured to be disposed onboard the aircraft and configured to contain a first working fluid, the first circulation loop including:
   a variable speed pump configured to pump the first working fluid around the first circulation loop,
   a battery heat exchanger configured to provide a thermal interface between the at least one battery pack and the first working fluid, and
   a controller configured to control operation of the variable speed pump to intermittently pump the first working fluid to distribute heat around the thermal management system.

The variable speed pump may include any type of pump which can vary the flow rate of fluid.

It may be that the first circulation loop comprises a manifold configured to enable direction of flow of the first working fluid to be reversed within the first circulation loop when the variable speed pump is powered off or stopped, so that the first working fluid flows in the reverse direction when the variable speed pump is subsequently powered on.

Alternatively, the pump may be configured to reverse the direction of flow so that it can be operated to pump fluid in a first direction, and in a second direction opposing the first direction.

It may be that the battery heat exchanger is a plate heat exchanger.

It may be that the variable speed pump is configured to control the flow rate of the first working fluid based on an expected battery thermal load corresponding to operation of the electric aircraft.

For example, when the aircraft is taking off, in an initial climb phase, descending, in a final approach phase, or landing, the expected battery thermal load may be relatively high, such that the variable speed pump may be controlled to increase the flow rate of the first working fluid during these operations. When the aircraft is in cruise, the expected battery thermal load may be relatively low, such that the variable speed pump may be controlled to decrease the flow rate of the first working fluid during this operation. The energy storage system may be configured to maintain an optimal thermal environment of the battery cells. Expected battery thermal load may also be impacted by ambient temperature, on the ground or in the air, such that the variable speed pump may be configured to control the flow rate of the first working fluid based on ambient temperature. For example, in a cold ambient environment (e.g., -40-5 degrees Celsius) the variable speed pump may be configured to control the first working fluid at a relatively low flow rate to warm the cells gradually, and optionally the frequency of the flow reversal may be lower than in a hot environment (e.g., 35-60 degrees Celsius) where the variable speed pump may be configured to control the first working fluid at a higher flow rate to remove excess heat and optionally there may be a high frequency of flow reversal to reduce thermal gradient in the battery.

It may be that the controller is configured to receive signals indicating a battery thermal load, and wherein the controller is configured to control the variable speed pump to vary the flow rate of first working fluid according to a predefined relationship with the battery thermal load.

Signals indicating a battery thermal load may be signals from a temperature sensor indicative of the temperature of the respective battery pack or may be signals indicating expected battery thermal load based on use of the energy storage system, for example in an aircraft, such as a high battery thermal load mode corresponding at least to the aircraft taking off, in an initial climb phase, descending, in a final approach phase, or landing, or a low battery thermal load mode corresponding at least to the aircraft being in cruise or on the ground. In other examples, the battery electrical load may be indicative of an expected battery thermal load, such that signals indicating the battery electrical load may be used as signals indicative of an expected battery thermal load.

It may be that the at least one battery pack comprises a plurality of battery packs, the first circulation loop configured to deliver the first working fluid to a corresponding plurality of parallel lines, wherein a battery heat exchanger is disposed on each of the lines and configured to provide a thermal interface between a respective battery pack and the first working fluid in the line. It may be that the thermal management system comprises a respective temperature sensor for each battery pack, each temperature sensor configured to output a temperature signal indicative of the temperature of the respective battery pack. It may be that a proportional control valve is disposed on each parallel line to independently control mass flow rate of the first working fluid to each battery heat exchanger based on the determined temperature.

The temperature sensor may be disposed on the battery pack to measure the temperature of the battery pack directly, or may be disposed upstream and downstream of the respective battery pack to measure a differential temperature of the first working fluid across the battery pack. The temperature sensor may be in the form of a surface thermistor, to measure the surface temperature of pipework, rather than directly measuring the fluid temperature.

It may be that the energy storage system further comprises a fault detection module configured to detect fluid leaking into any one of the plurality of battery packs, wherein the proportional control valve is configured to cut-off flow to the respective line at which the leak is detected.

In some examples, a leak may be detected based on monitoring a level of working fluid in a header tank over time. In other examples, a leak may be detected with sensors, such as a fluid pressure sensor or flow sensors in each parallel line, or conductivity sensors disposed inside a sealed enclosure of each of the battery packs, which may indicate pooling of moisture or coolant. If the energy storage system is configured to reverse the flow direction of the first working fluid, a proportional control valve may be disposed on either side of each battery pack on each parallel line to control the flow and cut-off through the respective line.

It may be that the at least one battery pack includes a film panel electrical resistive heating pad configured to heat the battery pack when the temperature signal indicates that the temperature of the battery pack is below a predetermined value.

The predetermined value may be based on a charging state of the batteries in the battery pack. If the batteries are charging, the predetermined value may be set to 15 degrees Celsius. If the batteries are discharging, the predetermined value may be set to 10 degrees Celsius.

It may be that the thermal management system further comprises a second circulation loop configured to be disposed offboard the aircraft. It may be that the first circulation loop comprises at least one first connector, and the second circulation loop comprises at least one second connector, the at least one first connector being configured to be coupled to the at least one second connector, so that the first working fluid is permitted to flow between the first circulation loop and the second circulation loop, wherein the second circulation loop comprises a cooling heat exchanger configured to cool the first working fluid in the second circulation loop.

Alternatively, the second circulation loop may comprise a replacement first working fluid to replace the first working fluid in the first circulation loop. The replacement first working fluid may be at an optimum temperature for the battery packs.

It may be that the at least one first connector and the at least one second connector are dry break connectors.

It may be that the at least one first connector comprises at least two first connectors and wherein the at least one second connector comprises at least two second connectors. It may be that at least one of the first connectors and/or at least one of the second connectors comprise check valves.

It may be that the energy storage system further comprises a third circulation loop configured to be disposed offboard the aircraft and configured to contain a second working fluid, the third circulation loop including a heat-pump configured to pump heat to or from the second working fluid. It may be that the cooling heat exchanger is configured to transfer heat between the first working fluid and the second working fluid.

The second circulation loop may be an open loop which is closed only on connection with the first circulation loop, or it may be a closed loop which allows circulation of fluid through the second circulation loop even when it is not connected to the first circulation loop. This allows flow of fluid through the second circulation loop to maintain thermal stability of the off-board (i.e., on-ground) system.

According to a second aspect, there is provided an electric aircraft with the energy storage system of the first aspect.

It may be that the electric aircraft further comprises a cabin air conditioning system onboard the aircraft, the air conditioning system comprising a compressor, a condenser, an expansion valve, and an evaporator, and configured to condition cabin air, wherein the air conditioning system comprises a refrigerant and the first circulation loop includes a conditioning heat exchanger configured to provide a thermal interface at the evaporator between the first working fluid and the refrigerant.

It may be that the controller is configured to receive signals indicating whether the aircraft is in a high battery thermal load mode or a low battery thermal load mode, the high battery thermal load mode corresponding to operations in which the aircraft is taking off, in an initial climb phase, descending, in a final approach phase, or landing, and the low battery thermal load mode corresponding to operations in which the aircraft is in cruise, and controlling the variable speed pump to have a first speed when it is determined that the aircraft is in a high battery thermal load mode, and controlling the variable speed pump to have a second speed when it is determined that the aircraft is in a low battery thermal load mode, wherein the first speed is higher than the second speed.

According to a third aspect, there is provided a method for controlling the electric aircraft, comprising:
determining whether the aircraft is in a high battery thermal load mode corresponding at least to the aircraft taking off, in an initial climb phase, descending, in a final approach phase, or landing, or whether the aircraft is in a low battery thermal load mode corresponding at least to the aircraft being in cruise,
operating the variable speed pump at a first speed when it is determined that the aircraft is in a high battery thermal load mode, and
operating the variable speed pump at a second speed when it is determined that the aircraft is in a low battery thermal load mode, wherein the first speed is higher than the second speed.

The method may include, after operating the variable speed pump at a first speed in response to determining that the aircraft is in a high battery thermal load mode:
determining that the aircraft is in a low battery thermal load mode,
stopping the variable speed pump,
manipulating a manifold to enable a reversed flow of the first working fluid around the first circulation loop; and
restarting the variable speed pump at the second speed, so that the direction of flow is reversed to reduce a temperature differential across the battery pack.

### BRIEF DESCRIPTION OF THE DRAWINGS

Embodiments will now be described by way of example only with reference to the accompanying drawings, which are purely schematic and not to scale, and in which:
**Figure 1** is a schematic illustration of a hybrid electric aircraft propulsion system;
**Figure 2** is a schematic illustration of a purely electric aircraft propulsion system;
**Figure 3** is a perspective view of an electric aircraft;
**Figure 4a** and **Figure 4b** (collectively **Figure 4**) are schematic illustrations of a first example energy storage system for an electric aircraft (including a hybrid electric aircraft), illustrating fluid flowing in opposing directions;
**Figure 5** is a schematic illustration of a second example energy storage system;
**Figure 6** is a schematic illustration of a third example energy storage system; and
**Figure 7** is a flowchart depicting an example method of controlling an electric aircraft.

### DETAILED DESCRIPTION

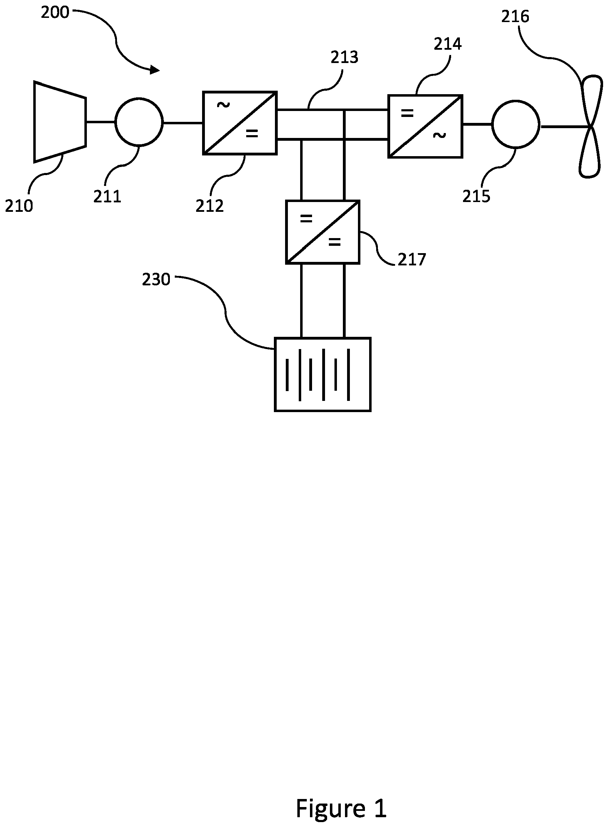

Referring to **Figure 1**, the propulsion system of a hybrid electric aircraft is generally indicated at 200 and incorporates both an engine 210, such as a gas turbine engine, and a battery 230. Both the engine 210 and the battery 230 are used as energy sources to power a motor-driven propeller 216, as well as ancillary electrical systems (not shown). The propulsion system 200 of the hybrid electric aircraft will typically further comprise a generator 211, an AC/DC converter 212, a high voltage DC (HVDC) distribution bus 213, a DC/AC inverter 214, a motor 215 that drives the propeller 216, and a DC/DC converter 217.

A shaft of the engine 210 is coupled to and drives the rotation of a shaft of the generator 211 which thereby produces alternating current. The AC/DC converter 212, which faces the generator 211, converts the alternating current into direct current which is fed to various electrical systems via the HVDC distribution bus 213. These electrical systems include the motor 215 that drives the propeller 216. The motor 215 will typically be a synchronous motor that interfaces with the HVDC distribution bus 213 via the DC/AC inverter 214.

The battery 230, which may be made up of a number of lithium ion battery modules connected in series and/or parallel, is connected to the HVDC distribution bus 213 via the DC/DC converter 217. The DC/DC converter 217 converts between a voltage of the battery 230 and a voltage of the HVDC distribution bus 213. In this way, the battery 230 can replace or supplement the power provided by the engine 210 (by discharging and thereby feeding the HVDC distribution bus 213) or can be charged using the power provided by the engine 210 (by being fed by the HVDC distribution bus 213).

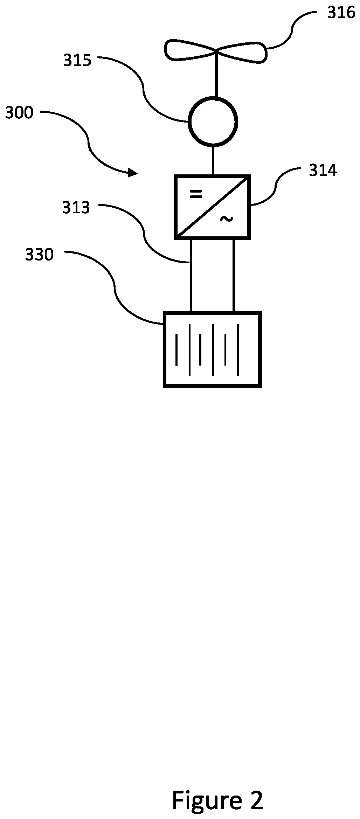

A battery will also appear in the propulsion system of a purely electric aircraft, generally indicated as 300 in **Figure 2****.** The battery 330 feeds a HVDC distribution bus 313, possibly via DC/DC converter (not shown), which delivers power to one or more synchronous motors 315 via a DC/AC inverter 314. The one or more motors 315 drive the one or more propellers 316 that propel that aircraft. It is noted that a plurality of batteries may feed into the at least one motor 315, such that separate windings of the at least one motor 315 may be powered by different batteries.

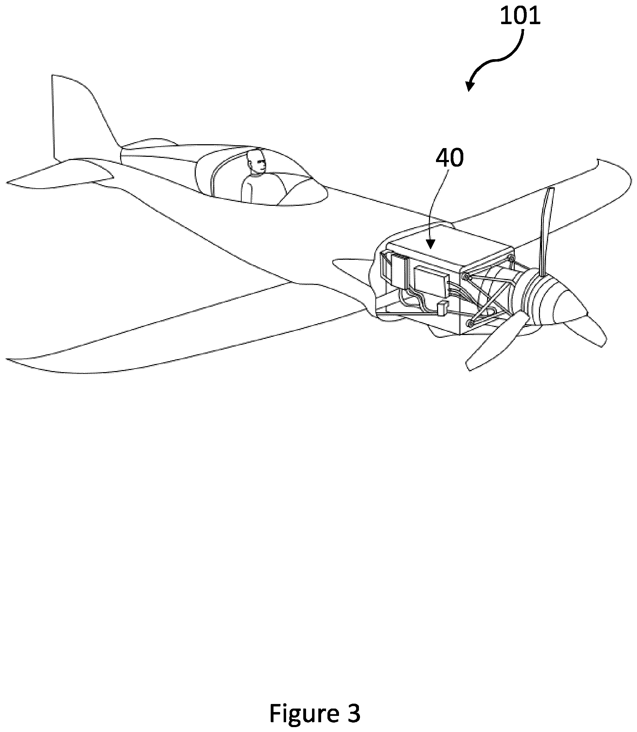

**Figure 3** shows an electric aircraft 101 which may be a hybrid aircraft or a purely electric aircraft, comprising a battery pack 40. The battery pack 40 may comprise at least one battery 230 or 330. There may be a plurality of battery packs 40, each battery back comprising at least one battery 230 or 330.

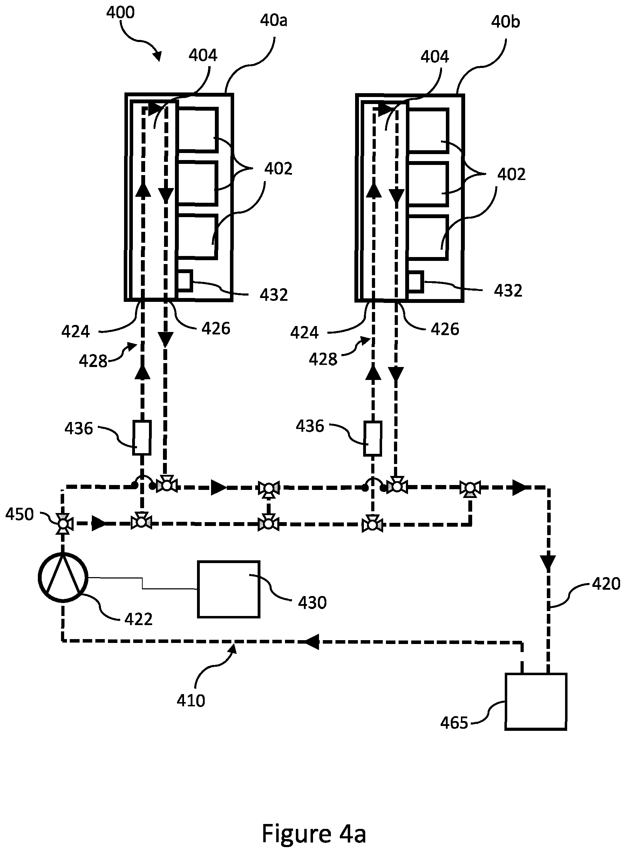

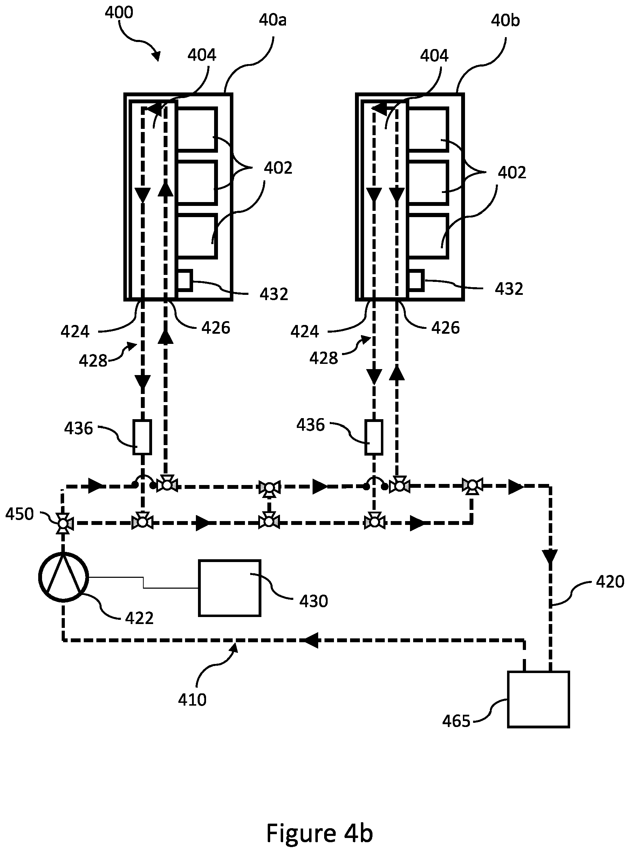

**Figure 4** shows a first example energy storage system 400 which may be used in the electric aircraft 101 shown in Figure 3. The energy storage system 400 in this example comprises two battery packs 40a - 40b. The battery packs 40 in this example are configured to be disposed onboard the aircraft. Each battery pack 40a - 40b comprises a plurality of batteries 402. It is noted that the figures are purely schematic and that each of the battery packs 40a - 40b may comprise any suitable number of batteries 402. It is further noted that the energy storage system 400 is not limited to comprising two battery packs 40a - 40b and may comprise any suitable number of battery packs 40, such as only a single battery pack 40 or a plurality of battery packs 40.

The energy storage system 400 comprises a thermal management system 410. The thermal management system 410 comprises a first circulation loop 420, which is configured to be disposed on the aircraft 101, and which is configured to contain a first working fluid. The first working fluid may be selected to provide thermal heat transfer properties, protection against freezing, protecting metals in the system against corrosion, inhibiting foam formation, cavitation and precipitation. The first working fluid may have a high flash point and/or be flame retardant, and it may be non-conductive.

The first circulation loop 420 comprises a pump 422 which is configured to pump the first working fluid around the first circulation loop 420. In this example, the pump 422 is a variable speed pump, and can therefore control the flow rate of the first working fluid. The arrows on the figures represent a general direction of fluid flow, with the arrows in Figure 4a showing circulation of the first working fluid in a generally clockwise direction, while the arrows in Figure 4b show circulation of the first working fluid in a generally anticlockwise direction (i.e., an opposite or reversed direction of flow to Figure 4a).

The pump may comprise a strainer filter configured to prevent debris from entering the pump. The mesh size for the strainer filter may be 100 - 500 microns.

The thermal management system 410 comprises a battery heat exchanger 404 for each battery pack 40a-40b. Therefore, in this example, there are two battery heat exchanger 404. In other examples, with more or fewer battery packs, there may be correspondingly more or fewer battery heat exchangers. The battery heat exchangers 404 in this example are plate heat exchangers. In other examples, the battery heat exchangers may be any suitable type of heat exchanger, such as shell-and-tube, finned-tube, etc. Each battery heat exchanger 404 is configured to provide a thermal interface between the respective battery pack 40a-40b and the first working fluid which is circulated through the battery heat exchanger 404. In some examples, the batteries 402 may abut or otherwise be in direct physical contact with a surface of a corresponding battery plate heat exchanger 404, or the batteries may be arranged in any suitable configuration about a corresponding battery heat exchanger.

Each battery heat exchanger 404 comprises one or more openings. In this example, each battery heat exchanger 404 comprises a first opening 424 (which acts as an inlet in Figure 4a and an outlet in Figure 4b) and a second opening 426 (which acts as an outlet in Figure 4a and an inlet in Figure 4b). The one or more openings may permit fluid to flow into or out from the battery heat exchanger 404.

The first circulation loop 420, in this example, comprises two parallel lines 428, each parallel line having a respective battery pack 40 disposed on it, and being configured to deliver working fluid to each of the battery heat exchangers 404 in parallel. The lines 428 connect each of the battery heat exchanger 404 to a loop so that the first circulation loop 420 is configured to deliver the first working fluid to the parallel lines 428 and to the respective battery heat exchangers 404, by operating the pump 422. In other words, each line 428 comprises a delivery line and a discharge line, which may change dependent on the direction of fluid flow through the first circulation loop 420. As shown in Figures 4a and 4b, each line 428 is coupled to a respective first opening 424 and second opening 426 of the respective battery heat exchanger 404. In other examples, the lines 428 may be arranged in series so that the first working fluid is configured to pass through each of the battery heat exchangers 404 consecutively. Having the lines in parallel ensures that each of the battery heat exchangers 404 is exposed to first working fluid at a similar temperature, to achieve even heat exchange across multiple battery packs 40. In series, a battery heat exchanger downstream will be likely to receive the first working fluid at a significantly different temperature than an upstream battery heat exchanger, such that heat distribution will not be equal across the battery packs 40.

Operation of the pump 422 is controlled with a controller 430. The controller 430 may control the pump 422 to intermittently pump the first working fluid through the first circulation loop 420 to distribute heat around the thermal management system. The pump 422 may be configured to control the flow rate of the first working fluid based on an expected thermal load of the battery packs 40a, 40b. The expected battery thermal load may correspond to an operation of the electric aircraft 101. For example, when the aircraft (e.g., the electric aircraft 101 of Figure 3) is taking off, in an initial climb phase, descending, in a final approach phase, or landing, the expected battery thermal load may be relatively high, such that the variable speed pump 630 may be controlled to increase the flow rate of the first working fluid during these operations. When the aircraft (e.g., the electric aircraft 101) is in cruise, the expected battery thermal load may be relatively low, such that the variable speed pump 422 may be controlled to decrease the flow rate of the first working fluid during this operation. Expected battery thermal load may also be impacted by ambient temperature, on the ground or in the air. The variable speed pump 422 may be configured to control the flow rate of the first working fluid based on ambient temperature. For example, in a cold ambient environment (e.g., -40 to 5 degrees Celsius) the variable speed pump 422 may be configured to control the first working fluid at a relatively low flow rate. The relatively low flow rate at which the variable speed pump 422 pumps the first working fluid may be in the range of 0 - 3L/min (litres per minute). The relatively low flow rate at which the variable speed pump 422 pumps the first working fluid may be any suitable range. This range may be increased up to 6L/min, for example, when operation of the pump is intermittent. The batteries 330 may therefore be warmed gradually. In a hot environment (e.g., 35 to 60 degrees Celsius) the variable speed pump 630 may be configured to pump the first working fluid at a higher flow rate to remove excess heat from the batteries 330. The relatively high flow rate at which the variable speed pump 422 pumps the first working fluid may be in the range of 3L/min - 20L/min. The relatively high flow rate at which the variable speed pump 422 pumps the first working fluid may be any suitable range. A signal indicating the expected battery load may be received by the controller 430 and the controller 430 may thereby control the flow rate of fluid by controlling the pump 422, for example, according to a predefined relationship with the battery thermal load. The energy storage system 400 may thereby be configured to maintain an optimal thermal environment of the batteries 402. Expected battery thermal load may also be impacted by a charging rate of the batteries 402 in the battery packs 40a, 40b. For example, the thermal load of the batteries 402 at higher charging rates may be high relative to the thermal load of the batteries 402 at lower charging rates. The variable speed pump 422 may therefore be configured to control the flow rate of the first working fluid based on a charging rate of the batteries 402 in the battery packs. The variable speed pump 422 may be configured to increase the flow rate of the first working fluid as the charging rate of the batteries 402 in the battery packs 40a, 40b increases.

In other examples, the pump 422 may be configured to control the flow rate of the first working fluid through the first circulation loop 420 based on an actual thermal load of the battery packs 40a, 40b. For example, the thermal management system 410 in this example comprises a temperature sensor 432 disposed on each of the battery packs 40a-40b to measure the temperature of the battery packs directly. In other examples, a temperature sensor may be disposed on at least one of the lines 428, such as on the delivery line and/or the discharge line of a respective battery heat exchanger 404 (i.e., upstream and/or downstream of the respective battery pack). When a temperature sensor is disposed both upstream and downstream of the battery pack, a difference in temperature of the first working fluid across a battery pack 40 (e.g., a temperature difference between the inlet and the outlet of a battery pack 40) may be determined, and the temperature differential is indicative of the battery thermal load. The temperature sensor 432 may be in the form of a surface thermistor, to measure the surface temperature of pipework, rather than directly measuring the fluid temperature. The temperature sensor 432 may alternatively be any suitable sensor. The temperature sensor 432 may alternatively be immersed in the working fluid or be substantially adjacent to a surface of the working fluid. The temperature sensors 432 may therefore transmit signals indicating an actual battery thermal load to the controller 430, and the controller 430 may be configured to control the pump 422 based on these signals, for example based on a predefined relationship with the battery thermal load.

It should be noted that although Figures 4a and 4b show only one pump 422, there may be more than one pump. The one or more pumps may be in series or in parallel. At least one of the one or more pumps may be a variable speed pump.

In this example, a proportional control valve 436 is disposed on each of the lines 428, for example on the line to the first opening 424. In other examples, the proportional control valve 436 may be disposed on the line to the second opening 426. In some examples, there may be a valve on each of the delivery line and the discharge line for each line 428. In yet other examples, the valves may be directional shut-off valves or a combination of both. In yet further examples, the proportional control valve 436 may be disposed inside a battery enclosure. The valves 436, in this example, are configured to control a mass flow rate of the first working fluid to a corresponding battery heat exchanger 404. The valves 436 may be configured to control a mass flow rate of the first working fluid to a corresponding battery heat exchanger 404 based on a temperature of the corresponding battery pack 40 determined by a corresponding temperature sensor (or sensors) 432. Additionally or alternatively, the valves 436 may be configured to control a mass flow rate of the first working fluid to a corresponding battery heat exchanger 404 based on a signal indicating a battery thermal load or a signal indicating an expected battery thermal load of the corresponding battery pack. The valves 436 may be controlled automatically by the controller 430 or manually.

The mass flow rate of the first working fluid in each battery pack 40a - 40b may therefore be controlled by corresponding valves 436 disposed on lines 428. Thus, if a battery pack 40 is hot relative to the other battery packs, the valves 436 may be controlled to restrict or reduce the flow of the first working fluid in the other battery packs, such that a mass flow rate to the relatively hot battery pack 40 is increased. An improvement in thermal balancing between battery packs 40a - 40b may therefore be achieved, in which each battery pack 40a - 40b may be maintained at substantially equivalent temperatures. For example, a temperature difference between battery packs 40a - 40b may be limited to 5 degrees Celsius.

The valves 436 may also be configured to cut off flow to a corresponding battery pack 40, for example if a leak is detected. A fault detection module, which may be in the controller 430, may be configured to detect a leak. In some examples, a leak may be detected based on monitoring a level of working fluid in a header tank 465 over time. In other examples, a leak may be detected with sensors, for example, a fluid pressure sensor or flow sensors disposed in each parallel line 428 and/or battery heat exchanger 404. Additionally or alternatively, a leak may be detected using conductivity sensors disposed inside a sealed enclosure of each of the battery packs 40a-40b, which may indicate pooling of moisture or coolant.

As shown in Figure 4a and Figure 4b, the first circulation loop 420 may comprises a plurality of manifolds 450 (only one is given a reference numeral in Figure 4 for clarity) which are configured to enable the direction of flow of the first working fluid, particularly through each of the battery heat exchangers 404, to be reversed, without requiring the pump 422 to reverse its pumping direction. In other examples, there may be any suitable arrangement of lines and manifolds which enable the reversal of flow direction through the battery heat exchangers 404. In further examples, the thermal management system 410 may comprise any system that permits flow to be reversed through the battery heat exchangers 404, for example with a reversible pump. Figures 4a and 4b show the manifolds operating to show opposing flow directions through the battery heat exchangers 404.

As mentioned above, the pump 422 may be configured to operate intermittently. As such, the pump 422 may be configured to stop or power off periodically to conserve energy and reduce noise generation. For example, the pump 422 may be configured to operate in a cycle in which the pump is ON (i.e., pumps the first working fluid) for two minutes and then is OFF (i.e., stopped or powered off) for three minutes. The pump 422 may additionally be controlled to automatically turn ON or remain ON in response to a relatively high-power event or a relatively high expected battery thermal load. The pump 422 may be configured to operate intermittently when the thermal load of the batteries 402 is relatively low. The pump 422 may be configured to operate intermittently when the electrical load of the batteries 402 is relatively low. The pump 422 may be configured to stop or power off periodically when the aircraft is in cruise. The pump 422 may additionally or alternatively be configured to stop or power off periodically during battery cell balancing. The pump 422 may additionally or alternatively be configured to stop or power off periodically when the rate of charging of the batteries 402 is relatively low (e.g., when the batteries are gradually charged overnight). The frequency at which the pump 422 powers off when the thermal load or expected thermal load of the batteries is relatively low may be high relative to the frequency at which the pump 422 powers off when the thermal load or expected thermal load of the batteries is relatively high.

Means for reversing the direction of flow of the first working fluid may therefore be operated when the pump 422 is powered off.

Reversing the direction of flow of the first working fluid may reduce a temperature difference between the inlet and the outlet of a battery pack 40. Consequently, a substantially homogeneous temperature distribution throughout the batteries 402 of the battery packs 40 may be achieved. This, in turn, may improve a life expectancy and reduce a likelihood of performance degradation of the batteries 402 of the battery packs 40.

In some examples, at least one of the battery packs 40a - 40b may comprise at least one heating element (not shown). The heating element may be a film panel electrical resistive heating pad. The heating element/elements may be configured to heat the batteries 330 in the battery pack, or to heat the battery pack 40. The heating elements may be configured to heat the battery 330 in the battery pack 40 when the at least one temperature sensor 432 senses that the temperature of the battery 330 is below a threshold. The optimal battery 330 temperature range may be 10 degrees Celsius to 40 degrees Celsius when the batteries 330 are discharging and 15 degrees Celsius to 35 degrees Celsius when the batteries are charging. The heating elements may be configured to heat the battery 330 in the battery pack, if whilst the batteries 330 are discharging, the at least one temperature sensor 432 senses that the temperature of the battery 330 is below 10 degrees Celsius. Additionally, the heating elements may be configured to heat the battery 330 in the battery pack, if whilst the batteries 330 are charging, the at least one temperature sensor 432 senses that that the temperature of the battery 330 is below 15 degrees Celsius.

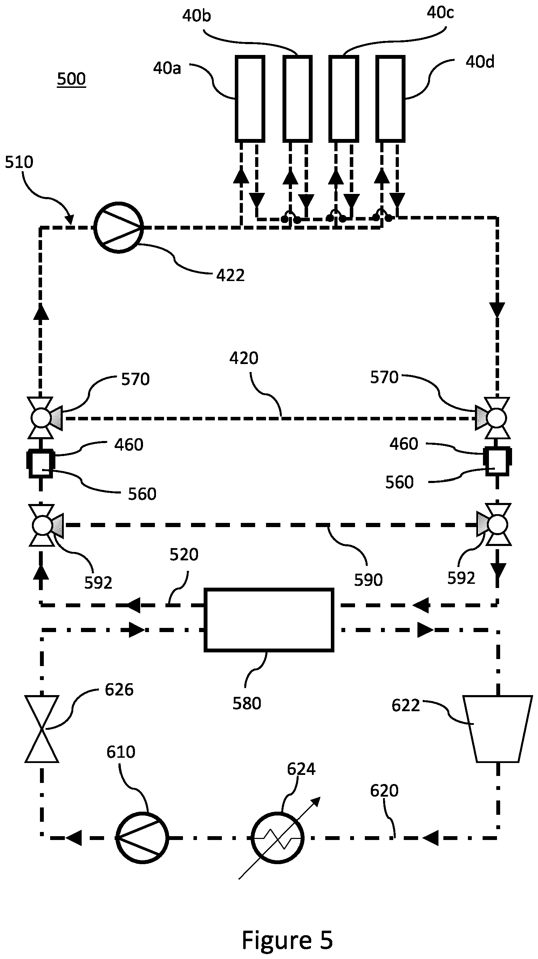

With reference to **Figure 5**, a second example energy storage system 500 is shown which comprises similar features to the first example energy storage system 400, with like numerals representing similar features. In this example, a second example thermal management system 510 comprises the first circulation loop 420 which is connected to four battery packs 40a-40d of the energy storage system 500, and the thermal management system 510 further comprises a second circulation loop 520 and a third circulation loop 620. The second circulation loop 520 and the third circulation loop 620 are configured to be disposed offboard the aircraft (e.g., offboard the aircraft 101 shown in Figure 3).

In this example, the first circulation loop 420 comprises two first connectors 460, and the second circulation loop 520 comprises two corresponding second connectors 560. The first connectors 460 are configured to be coupled to the second connectors 560 so that first working fluid is permitted to flow between the first circulation loop 420 and the second circulation loop 520. The first connectors 460 and the second connectors 560 are dry break connectors, in this example. This may reduce a likelihood of air entrapment in the first circulation loop 420 and the second circulation loop 520. In other examples, there may be any suitable number of first connectors and second connectors. For example, one of each connector may be sufficient to allow transfer of fluid between the first and second circulation loops. Further, the first connectors 460 and/or the second connectors 560 may comprise directional check valves. Including directional check valves may help with priming the thermal management system 510 and further reduce a likelihood of air entrapment and fluid loss in the first circulation loop 420 and the second circulation loop 520.

Therefore, when the aircraft 101 is on the ground, second connectors 560 of the second circulation loop 520 may be coupled to first connectors 460 of the first circulation loop 420. First working fluid can then be permitted to flow into the second circulation loop 520. The first circulation loop 420 may comprise guidance valves 570 configured to facilitate the flow of first working fluid to the first connectors 460 rather than around the first circulation loop 420.

As such, when the aircraft is on the ground, the first working fluid may be pumped by the pump 422 around the first circulation loop 420 and around the second circulation loop 520. Although not shown, the second circulation loop 520 may comprise a further pump. In this example, the second circulation loop comprises a cooling heat exchanger 580 which is configured to cool the first working fluid in the second circulation loop 520. In this example, the cooling heat exchanger 580 is a liquid-liquid heat exchanger which exchanges heat with a second working fluid contained within the third circulation loop 620. In other examples, there may not be a third circulation loop, and the cooling heat exchanger may alternatively be a radiator or any other suitable heat exchanger. Heat is thereby transferred between the first working fluid and the second working fluid, or a surrounding environment, when the first working fluid flows through the cooling heat exchanger 580. As such, heat absorbed by the first working fluid in the battery packs 40a - 40d may be more effectively transferred away from the first working fluid when the first working fluid is pumped through the cooling heat exchanger 580. The second circulation loop 520 may be configured to contain a replacement first working fluid. The replacement first working fluid may be configured to be within the optimum temperature range (e.g., 15 degrees Celsius - 20 degrees Celsius) for cooling the batteries in the battery packs 40a - 40d. Therefore, when the aircraft 101 is on the ground and the first circulation loop 420 and the second circulation loop 520 are connected, the first working fluid in the first circulation loop 420 may be replaced by the replacement first working fluid, which may result in faster cooling.

In this example, the second circulation loop 520 comprises a bypass connection 590, which comprises bypass valves 592 on either end. In other examples, there may be only one bypass valve 592 on only one end. The bypass valves 592 are configured to control fluid flow through the bypass connection 590. The bypass connection 590 may comprise a pump (not shown) which enables the first working fluid to be circulated in the second circulation loop 520 without connection to the first circulation loop, through the bypass connection 590 which closes the second circulation loop. For example, the replacement first working fluid may be circulated around the second circulation loop 520 whilst the aircraft 101 is flying. Circulating the replacement first working fluid around the second circulation loop 520 may improve a thermal stability of the replacement first working fluid by preventing or reducing a proportion of the replacement first working fluid from being or becoming stationary, and it may enable maintaining the replacement fluid at an optimal temperature, ready for replacing the first working fluid in the first circulation loop 420. In other examples, there may be no bypass connection or bypass valves, such that the second circulation loop may be an open loop which is closed only on connection with the first circulation loop.

In this example, the third circulation loop 620 comprises a pump 610 configured to pump the second working fluid around the third circulation loop 620. In this example, the third circulation loop 620 comprises a heat pump configured to transfer heat to and/or from the second working fluid. The third circulation loop 620 may however comprise any system for transferring heat to and/or from the second working fluid. In this example, the third circulation loop 620 comprises a compressor 622, a condenser 624, an expansion valve 626, and the cooling heat exchanger 580. The second working fluid flows through the cooling heat exchanger 580 separately from the first working fluid. The cooling heat exchanger 580 is therefore configured to transfer heat between the first working fluid and the second working fluid. The cooling heat exchanger 580 may be a counter flow heat exchanger or a parallel flow heat exchanger.

Although not shown, the cooling heat exchanger 580 may comprise an internal bypass. The internal bypass of the cooling heat exchanger 580 may permit working fluid to flow between the second circulation loop 520 and the third circulation loop 620. For example, the second working fluid may be permitted to flow (via the internal bypass) from the third circulation loop 620 and into the second circulation loop 520. If the second circulation loop 520 does not contain a replacement first working fluid, then the second working fluid may be pumped by the pump 610 through the internal bypass into the second circulation loop 520, around the second circulation loop 520 via the bypass connection590, and back into the third circulation loop 620 via the internal bypass.

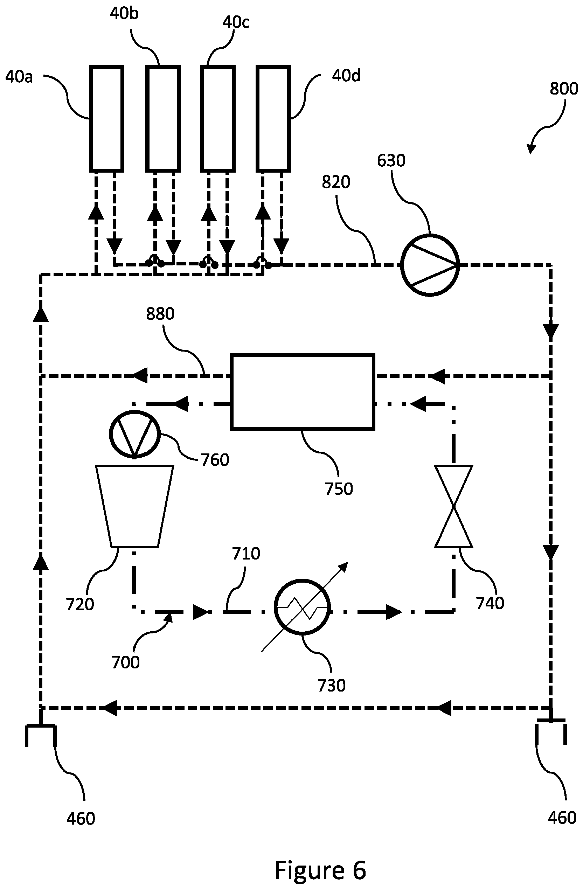

**Figure 6** shows a third example energy storage system 800 comprising a first circulation loop 820 which is similar to the first circulation loop 420 of the first energy storage system 400 and second example energy storage system 500 with like reference numerals denoting like features, but differs from the first circulation loop 420 in the first energy storage systems 400 and second energy storage system 500 in that the first circulation loop 820 of the third energy storage system 800 comprises further features. In this example, an aircraft (e.g., the electric aircraft 101 of Figure 3) comprises a cabin air conditioning system 700 which is disposed onboard the aircraft 101. The air conditioning system 700 may provide heating or cooling to the cabin of the aircraft. In an example, the air conditioning system comprises a refrigerant circulation loop 710 comprising a compressor 720, a condenser 730, an expansion valve 740, and a conditioning heat exchanger 750 disposed on the refrigerant circulation loop 710. The refrigerant circulation loop 710 is configured to contain a refrigerant. In this example, a refrigerant pump 760 is configured to pump the refrigerant around the refrigerant circulation loop 710.

In this example, the first circulation loop 820 further comprises an air conditioning connecting line 880, and the conditioning heat exchanger 750 is disposed on the air conditioning connecting line 880. The air conditioning connecting line 880 therefore permits first working fluid in the first circulation loop 820 to be pumped through the conditioning heat exchanger 750. The conditioning heat exchanger 750 may be a liquid-liquid heat exchanger. The conditioning heat exchanger 750 in this example is configured to hydraulically separate the refrigerant from the first working fluid whilst facilitating heat transfer between the fluids. The conditioning heat exchanger 750 may be a counter flow heat exchanger or a parallel flow heat exchanger. The conditioning heat exchanger 750 in this example, acts as an evaporator in the air conditioning system, and thus provides a thermal interface at the evaporator between the first working fluid and the refrigerant. In this example, the refrigerant is warmed in the evaporator by heat transferred via the conditioning heat exchanger 750 from the first working fluid, while the first working fluid is cooled by the heat transfer. The refrigerant in the condenser 730 may then release the transferred heat to the cabin.

Although the example of the present disclosure shows a conditioning heat exchanger 750 configured to separate the first working fluid from the refrigerant, it is noted that the cabin air conditioning system 700 may be directly integrated into the first circulation loop 820. In this aspect, the cabin air conditioning system 700 and the first circulation loop 820 may comprise a common fluid system in which the first working fluid may be pumped into the cabin air conditioning system 700. This may improve an energy efficiency of the aircraft.

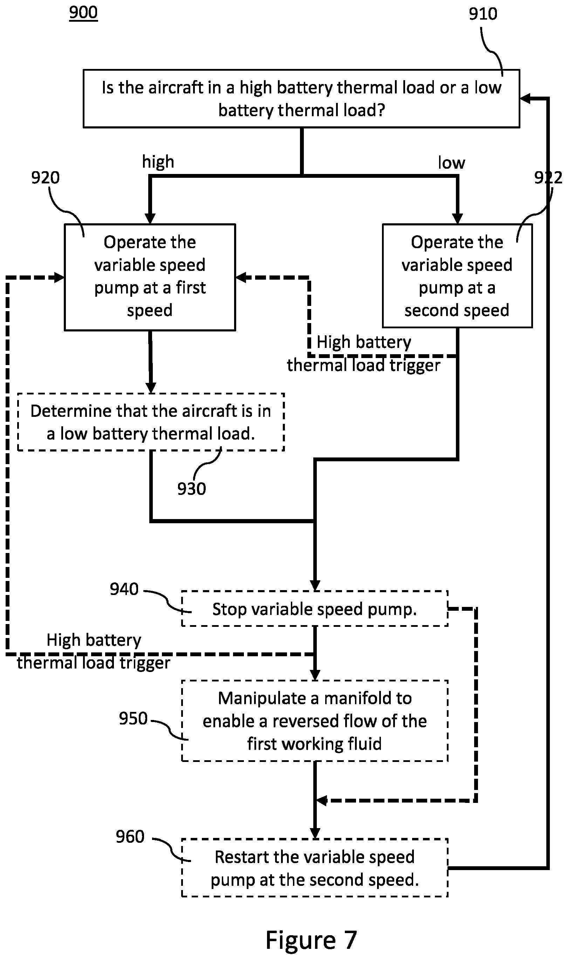

With reference to **Figure 7**, the present disclosure also relates to a method 900 of controlling an electric aircraft comprising any example energy management system 400, 500, 800. In block 910, the method comprises determining whether the aircraft is in a high battery thermal load or a low battery thermal load mode. The high battery thermal load mode may correspond at least to the aircraft either taking off, being in an initial climb phase, descending, being in a final approach phase, or landing. The low battery thermal load mode may correspond at least to the aircraft being in cruise.

As shown in block 920, if it is determined in block 910 that the aircraft is in a high battery thermal load, then the variable speed pump 422 may be operated at a first speed. On the hand, as shown in block 922, if it is determined in block 910 that the aircraft is in a low battery thermal load, then the variable speed pump 422 may be operated at a second speed. The first speed may be higher than the second speed.

The method may proceed to block 930 following block 920, it may be determined that the aircraft is in a low battery thermal load after it has been determined that the aircraft is in a high battery thermal load in block 920. This may occur, for example, when the aircraft transitions from the initial climb phase of its flight to cruise.

From blocks 922 and 930, the method 900 may proceed to block 940, in which the variable speed pump 422 may be controlled to stop, for example, for intermittent operation. Alternatively, from block 922, the method may determine that the battery has high load which may trigger the method to proceed to block 920 instead of block 940.

In block 950, following block 940, the manifold system 450 may be manipulated to enable a reversed flow of the first working fluid around the first circulation loop 420, 820. This may be particularly advantageous after the method 900 has operated in block 920. On other examples, the method 900 may be triggered to proceed to block 920 after block 940 if it is determined that the battery has high load. In some examples, block 950 may be omitted, and the method 900 may simply stop the variable speed pump in block 940 for a set rest time, and then proceed to block 960 to restart the variable speed pump after the set rest time.

Finally, in block 960 following block 950, the variable speed pump 422 may be restarted at the second speed, and the method 900 may return to block 910.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. An energy storage system (400, 500, 800) for an electric aircraft (101), the energy storage system comprising:
at least one battery pack (40, 40a-d) configured to be disposed onboard the aircraft, and
a thermal management system (410, 510), the thermal management system comprising:
a first circulation loop (420, 820) configured to be disposed onboard the aircraft and configured to contain a first working fluid, the first circulation loop including:
a variable speed pump (422) configured to pump the first working fluid around the first circulation loop,
a battery heat exchanger (404) configured to provide a thermal interface between the at least one battery pack and the first working fluid, and
a controller (430) configured to control operation of the variable speed pump to intermittently pump the first working fluid to distribute heat around the thermal management system.

2. The energy storage system (400, 500, 800) of claim 1, wherein the first circulation loop (420, 820) comprises a manifold (450) configured to enable direction of flow of the first working fluid to be reversed within the first circulation loop when the variable speed pump (422) is powered off or stopped, so that the first working fluid flows in the reverse direction when the variable speed pump is subsequently powered on.

3. The energy storage system (400, 500, 800) of any of the preceding claims, wherein the battery heat exchanger (404) is a plate heat exchanger.

4. The energy storage system (400, 500, 800) of any of the preceding claims, wherein the variable speed pump (422) is configured to control the flow rate of the first working fluid based on an expected battery thermal load corresponding to operation of the electric aircraft (101).

5. The energy storage system (400, 500, 800) according to claim 4, wherein the controller (430) is configured to receive signals indicating a battery thermal load, and wherein the controller is configured to control the variable speed pump (422) to vary the flow rate of first working fluid according to a predefined relationship with the battery thermal load.

6. The energy storage system (400, 500, 800) of any of the preceding claims, wherein the at least one battery pack (40, 40a-d) comprises a plurality of battery packs, the first circulation loop (420, 820) configured to deliver the first working fluid to a corresponding plurality of parallel lines (428), wherein a battery heat exchanger (404) is disposed on each of the lines and configured to provide a thermal interface between a respective battery pack and the first working fluid in the line;
the thermal management system (410, 510) comprising a respective temperature sensor (432) for each battery pack, each temperature sensor configured to output a temperature signal indicative of the temperature of the respective battery pack, and
wherein a proportional control valve is disposed on each parallel line to independently control mass flow rate of the first working fluid to each battery heat exchanger based on the determined temperature.

7. The energy storage system (400, 500, 800) of claim 6 further comprising a fault detection module (430) configured to detect fluid leaking into any one of the plurality of battery packs (40, 40a-d), wherein the proportional control valve (436) is configured to cut-off flow to the respective line (428) at which the leak is detected.

8. The energy storage system (400, 500, 800) of claim 6 or 7, wherein the at least one battery pack (40, 40a-d) includes a film panel electrical resistive heating pad configured to heat the battery pack when the temperature signal indicates that the temperature of the battery pack is below a predetermined value.

9. The energy storage system (400, 500, 800) of any of the preceding claims, wherein the thermal management system (410, 510) further comprises a second circulation loop (520) configured to be disposed offboard the aircraft (101), and wherein:
the first circulation loop (420) comprises at least one first connector (460) , and
the second circulation loop comprises at least one second connector (560), the at least one first connector being configured to be coupled to the at least one second connector, so that the first working fluid is permitted to flow between the first circulation loop and the second circulation loop, wherein the second circulation loop comprises a cooling heat exchanger (580) configured to cool the first working fluid in the second circulation loop.

10. The energy storage system (400, 500, 800) of claim 9, wherein the at least one first connector (460) and the at least one second connector (560) are dry break connectors.

11. The energy storage system (400, 500, 800) of claim 10, wherein the at least one first connector (460) comprises at least two first connectors and wherein the at least one second connector (560) comprises at least two second connectors and wherein at least one of the first connectors and/or at least one of the second connectors comprise check valves.

12. The energy storage system (400, 500, 800) of any of claims 9 to 11, further comprising:
a third circulation loop (620) configured to be disposed offboard the aircraft (101) and configured to contain a second working fluid, the third circulation loop including a heat-pump configured to pump heat to or from the second working fluid, and
the cooling heat exchanger (580) is configured to transfer heat between the first working fluid and the second working fluid.

13. An electric aircraft (101) with the energy storage system (400, 500, 800) of any preceding claim.

14. The electric aircraft (101) according to claim 13, further comprising a cabin air conditioning system (700) onboard the aircraft, the air conditioning system comprising a compressor (720), a condenser (730), an expansion valve (740), and an evaporator, and configured to condition cabin air, wherein the air conditioning system comprises a refrigerant and the first circulation loop (420) includes a conditioning heat exchanger (750) configured to provide a thermal interface at the evaporator between the first working fluid and the refrigerant.

15. The electric aircraft (101) according to claim 13 when dependent on claim 4, wherein the controller (430) is configured to receive signals indicating whether the aircraft is in a high battery thermal load mode or a low battery thermal load mode, the high battery thermal load mode corresponding to operations in which the aircraft is taking off, in an initial climb phase, descending, in a final approach phase, or landing, and the low battery thermal load mode corresponding to operations in which the aircraft is in cruise; and
controlling the variable speed pump (422) to have a first speed when it is determined that the aircraft is in a high battery thermal load mode, and controlling the variable speed pump to have a second speed when it is determined that the aircraft is in a low battery thermal load mode, wherein the first speed is higher than the second speed.
